# FASCICULE DE BREVET EUROPEEN

(11) **EP 0 778 435 B1**
(45) Date de publication et mention de la délivrance du brevet: **14.04.1999**
(21) Numéro de dépôt: 96203415.3
(22) Date de dépôt: 02.12.1996
(51) Int. Cl.: F16L 3/12, F16L 3/137

(54) **Dispositif de fixation d'une conduite à une paroi**
Vorrichtung zum Befestigen von Rohren an einer Wand
Device for fixing a conduit to a wall

(30) Priorité: 07.12.1995 NL 1001849
(43) Date de publication de la demande: 11.06.1997
(73) Titulaire: J. van Walraven B.V., NL-3641 RK Mijdrecht (NL)
(72) Inventeur: van Walraven, Jan, 3641 GP Mijdrecht (NL)
(74) Mandataire: Boelsma, Gerben Harm, Ir.

(56) Documents cités:
- GB-A- 799 446
- GB-A- 1 155 773
- US-A- 3 847 331
- US-A- 3 913 187

## Description

La présente invention concerne un dispositif de fixation d'une conduite à une paroi, constitué d'une bande de matière à conformer en collier enserrant la conduite, ladite bande étant pourvue à une de ses extrémités d'un bloc de liaison aménagé à sa première extrémité de tête pour fixation a une paroi, l'autre extrémité libre de la bande étant conformée en flasque qui peut être enfiché de côté dans un évidement du bloc et calé et, pour cela, est pourvue d'au moins une fiche de liaison du type à barbillon, ladite fiche étant guidée, lors de l'enfichage dans l'évidement le long d'une paroi dudit évidement et coopérant avec une saillie de verrouillage faisant saillie de la paroi en regard de l'évidement et orientée en oblique vers la première paroi citée, observée dans la direction de l'enfichage.

Un tel dispositif est décrit dans le document US 3913187. Dans ce dispositif connu, la fiche de liaison est formée par une languette large et assez rigide, qui est pourvue, de toute sa largeur, de dents de verrouillage, coopérant avec des dents correspondants à la paroi respective dudit évidement.

En principe ce dispositif connu est apte à être appliqué à la fixation de conduites d'évacuation d'eau de pluie sur des murs et des parois de bâtiments. Il est l'occurrence habituel de fixer sur la paroi ou le mur tout d'abord un certain nombre de blocs de liaison correspondant au nombre souhaité de points de fixation d'ordinaire en ligne verticale. On dispose donc d'une série de blocs de liaison fixés à la paroi ou au mur de support avec des bandes de matière qui en font saillie en porte-à-faux. Le tuyau à fixer est à présent déposé le long des blocs de liaison ainsi prémontés, après quoi on rabat les bandes de matière une à une autour du tuyau et on les enfiche, par leur extrémité de flasque encore libre, de côté, dans l'évidement des blocs respectives.

Le dispositif connu présente, entre autres, l'inconvénient qu'il n'est pas facile de détacher la bande, une fois fixée autour de la conduite.

La présente invention a pour objet d'éliminer cet inconvénient et d'améliorer ce dispositif connu en le rendant plus aisé à utiliser.

Cet objectif est atteint selon la présente invention en étant caracterisé par deux fiches de liaison situés à distance l'une de l'autre dans le sens de la largeur du flasque, qui coopèrent avec une languette de verrouillage commune et souple, constituant ladite saillie de verrouillage.

Le dispositif selon l'invention présente d'énormes avantages vis-à-vis du dispositif connu décrit ci-dessus.

Un avantage important réside dans le fait que la bande de matière peut être clipsée en position de fermeture de manière simple autour de la conduite à fixer. La fiche de liaison, qui est orientée en oblique par rapport à sa paroi de guidage dans la phase de démarrage de la fermeture, peut être formée relativement flexible et céder aisément au cours de cette phase sans que cela porte préjudice à la solidité de la fermeture. La fiche de liaison vient en fait s'appliquer finalement à plat contre sa paroi de guidage et pourrait seulement se dégager de cette paroi de guidage par flexion en raison de sa flexibilité, mais un tel déplacement ne ferait que renforcer l'engagement avec la languette de verrouillage faisant saillie de la paroi en regard de l'espace d'enfichage.

Lorsqu'on le souhaite, la fermeture peut être déverrouillée par un tour de main simple.

A cet effet, on peut enficher, du côté opposé au côté de fermeture du bloc de liaison ou par un trou dans le flasque, un outil en forme de fiche, tel qu'un tourne-vis, dans l'espace compris entre les deux fiches de liaison le long de la paroi de guidage pour déformer la languette de verrouillage latéralement et la dégager ainsi des deux fiches de liaison.

Un mode d'exécution preferé du dispositif selon l'invention est caracterisé par des fiches de liaison opérant autant par la présence d'un barbillon que selon le principe d'encliquetage, qui coopèrent avec des systèmes d'encliquetage, respectivement à crochet correspondants avec la paroi de l'évidement en sorte que, par enfichage de côté du flasque, il se fasse tout d'abord une liaison d'encliquetage et ensuite, en enfonçant encore plus loin, une liaison par barbillon.

D'autres caractéristiques de l'invention seront expliquées plus en détail ci-dessous sur la base d'un exemple de réalisation en se référant aux dessins ci-annexés dans lesquels :
la Fig. 1 est une vue du dispositif selon l'invention dans la direction de la conduite à fixer,
la Fig. 2 est une vue en coupe transversale du dispositif de fixation selon la Fig. 1 en position de fermeture permanente,
la Fig. 3 est une vue de la bande de matière à l'état déployé observée de la droite dans la Fig. 1,
la Fig. 4 est une vue de côté du dispositif illustré à l'état déployé dans la Fig. 3,
la Fig. 5 est une vue de côté du bloc de liaison du dispositif selon les Fig. 1 à 4,
la Fig. 5A est une vue en coupe transversale de la bande de matière,
la Fig. 6 est une vue du flasque de fermeture observé de la gauche dans la Fig. 4, et
les Fig. 7A, 7B et 7C sont des vues en coupe transversale selon la ligne VII-VII de la Fig. 5 dans trois phases successives de la fermeture de la bande de matière autour de la conduite à fixer.

Le dispositif de fixation selon l'invention est constitué d'une bande de matière flexible 1 de forme plus ou moins convexe en coupe transversale, qui est formé d'une pièce, par exemple par coulée par injection, avec un bloc de liaison 2 qui se trouve à une de ses extrémités. La matière plastique est par exemple le polyéthylène ou le polypropylène. La bande de matière 1 s'évase, à son autre extrémité, en un flasque de fermeture 3. La transition entre la bande de matière et le bloc de liaison 2 et celle entre la bande de matière et le flasque de fermeture 3 sont renforcées par des joues latérales 4, respectivement 5.

Le bloc 2 est destiné - alors que la bande de matière 1 en fait encore saillie librement - à être fixé, par sa face de tête 2a, contre une paroi ou un mur de support. Le bloc 2 est monté à cet effet par exemple pour recevoir un écrou ou pour être "accroché" sur la tête d'un boulon ou d'une fiche de fixation 6 enfoncé(e) dans le mur, en sorte que la tête de boulon se loge dans un espace récepteur 7 où elle est emprisonnée. D'autres modes de fixation sont cependant également possibles.

Le flasque de fermeture 3 est pourvu de deux types de fiches de liaison 8 et 9 qui en font saillie. Seule la fiche de liaison 8 est du type à encliquetage et est pourvue à cet effet d'une extrémité 8a épaissie de forme sphérique. Cette fiche fait saillie approximativement du centre de la face de fermeture du flasque de fermeture 3.

Il y a deux fiches de liaison 9 disposées à distance l'une de l'autre dans la direction transversale et situées plus près de la transition avec la bande de matière 1, lesdites fiches état de type à "barbillon" et se terminant à cet effet par une partie en crochet 9a à leur extrémité libre.

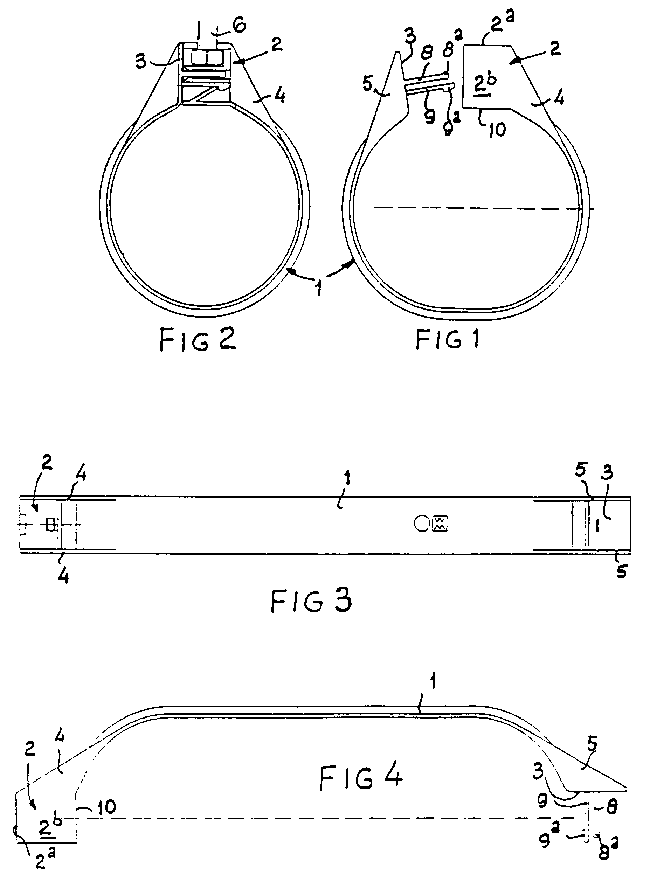

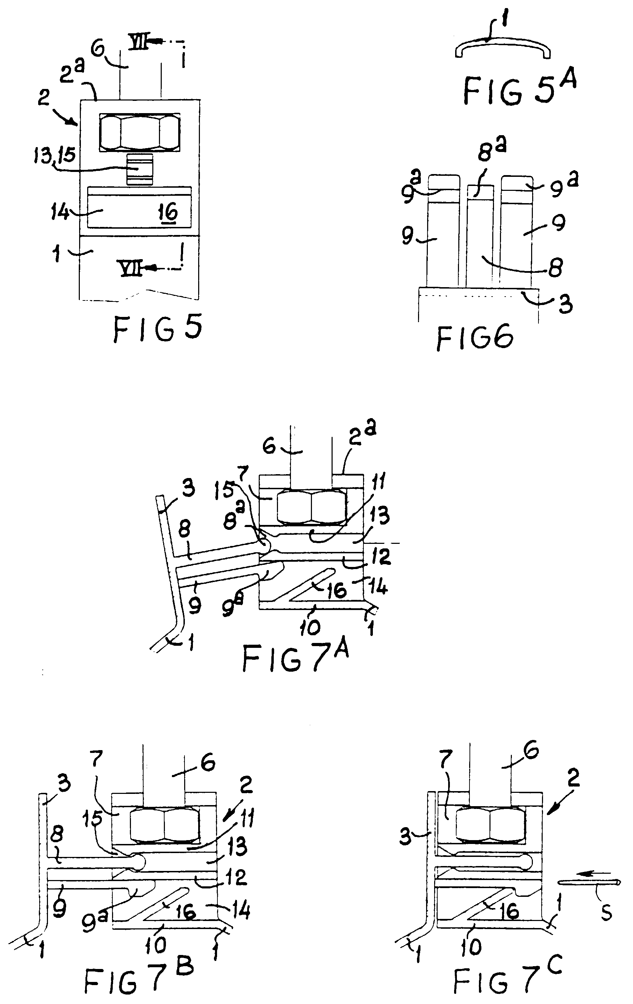

Pour recevoir les fiches de liaison 8 et 9, le bloc de liaison présente un évidement s'étendant d'un côté à l'autre, qui est délimité par les parois latérales 2b (Fig. 1 et 4) et par les parois 10 et 11 qui sont disposées transversalement à l'axe du boulon de fixation mural 6. Cet évidement est partagé en deux compartiments 13 et 14 par une paroi intermédiaire 12 qui s'étend parallèlement aux parois 10 et 11. Le compartiment 13 sert à l'enfichage et à la réception d'éléments d'encliquetage 8, tandis que le compartiment 14 sert à la réception des deux fiches 9.

Le compartiment 13 présente, à l'extrémité d'enfichage (Fig. 2 et 7A, 7B, 7C) une ouverture d'enfichage/encliquetage 15 qui se rétrécit graduellement, puis s'évase à nouveau graduellement, ladite ouverture pouvant coopérer avec l'épaississement sphérique 8a des éléments d'encliquetage 8 de manière à se bloquer.

Dans le compartiment 14 se trouve une languette de verrouillage 16 coopérant avec les fiches 9 et qui est orientée en oblique vers la paroi intermédiaire 12 depuis la paroi 10 en se plaçant dans la direction d'enfichage des fiches de liaison.

Pour le fonctionnement et l'usage du dispositif de fixation, on se référera à présent aux Fig. 7A, 7B, 7C dans lesquelles trois phases successives de la fermeture de la bande de matière 1 rabattue autour d'une conduite à fixer sont illustrées.

La Fig. 7A représente la phase de départ lors de l'enfichage des éléments d'encliquetage 8 et des deux fiches 9 dans les compartiments respectifs 13 et 14. L'épaississement sphérique 8a des éléments d'encliquetage 8 se déplace vers l'intérieur contre un flanc oblique de l'ouverture d'enfichage 15, tandis que les fiches 9 viennent en contact, par leur partie à crochet 9a, avec l'autre côté de la paroi intermédiaire 12 et peuvent y fléchir de manière élastique.

Dans la phase suivante selon la Fig. 7B, les éléments d'encliquetage 8 viennent juste de passer, par leur extrémité à épaississement sphérique 8a, à travers l'ouverture d'enfichage 15, tandis que les fiches 9 sont venues s'appliquer à plat contre la paroi intermédiaire 12. Cette phase coïncide avec la position de fermeture momentanée du dispositif de fixation. Il n'est pas encore question de coopération entre les fiches 9 et la languette de verrouillage 16 et la fixation est encore aisée à rompre, parce que la fiche 8 peut être encore aisément retirée vers l'extérieur par l'ouverture 15 en déplaçant son extrémité à épaississement sphérique 8a dans le sens inverse.

Par déplacement du flasque de fermeture 3, observé dans la Fig. 7B, plus vers la droite, les fiches 9 guidées par la paroi intermédiaire 12 viennent en contact avec la languette de verrouillage 16, qui est d'abord refoulée par les extrémités à crochet 9a vers le côté pour retourner ensuite de manière élastique dans sa position de verrouillage effective derrière les extrémités à crochet. A ce moment, le flasque de fermeture 3 vient s'appliquer, par sa face de fermeture, contre le côté de gauche du bloc de liaison 2. On atteint alors la phase selon la Fig. 7C (se référer également à la Fig. 2) dans laquelle la bande de matière est fermée en permanence et de manière bien ajustée (autorisant éventuellement un déplacement de la conduite) autour de la conduite.

La liaison représentée dans la Fig. 7C peut être déverrouillée, si on le souhaite, de manière simple en introduisant à l'intérieur, par le côté de droite, un outil en forme de fiche avec un effet de clavette, tel qu'un tourne-vis S, via l'espace intermédiaire entre les deux fiches de liaison 9 le long de la paroi 12. Par effet de clavette des flancs croissants de l'extrémité du tourne-vis, la languette de verrouillage 16 est dégagée par flexion de son engagement avec les parties à crochet de verrouillage 9a dans le sens de la flèche. Lorsque la liaison est ainsi déverrouillée, la bande de matière retourne à l'état d'encliquetage selon la Fig. 7B par effet de ressort. En continuant à enficher le tourne-vis S et en le pressant contre le flasque 3 (ou contre la face de fermeture de celui-ci), la liaison d'encliquetage peut également être rompue.

Dans une forme de réalisation sans éléments d'encliquetage 8, la bande de matière 1 pourrait même retourner de manière élastique dans sa position déployée.

## Revendications

1. Dispositif de fixation d'une conduite à une paroi, constitué d'une bande de matière à conformer en collier enserrant la conduite, ladite bande étant pourvue à une de ces extrémités d'un bloc de liaison aménagé à sa première extrémité de tête pour fixation à une paroi, l'autre extrémité libre de la bande étant conformée en flasque qui peut être enfiché et calé de côté dans un évidement du bloc, et, pour cela, est pourvue d'au moins une fiche de liaison du type à barbillon, ladite fiche étant guidée, lors de l'enfichage dans l'évidement (14) le long d'une paroi (12) dudit évidement et coopérant avec une saillie de verrouillage (16) faisant saillie de la paroi en regard de l'évidement (14) et orientée en oblique vers la première paroi citée (12), observée dans la direction de l'enfichage, caractérisé par deux fiches de liaison situés à distance l'une de l'autre dans le sens de la largeur du flasque, qui coopèrent avec une languette de verrouillage commune et souple, constituant ladite saillie de verrouillage.

2. Dispositif selon la revendication 1, caractérisé par des fiches de liaison opérant autant par la présence d'un barbillon que selon le principe d'encliquetage, qui coopèrent avec des systèmes d'encliquetage, respectivement à crochet correspondants avec la paroi de l'évidement en sorte que, par enfichage de côté du flasque, il se fasse tout d'abord une liaison d'encliquetage et ensuite, en enfonçant encore plus loin, une liaison par barbillon.

3. Dispositif selon la revendication 2, caractérisé en ce que l'évidement est partagé par une paroi intermédiaire s'étendant dans la direction d'enfichage en deux compartiments dont le premier sert à recevoir une fiche de liaison du type à encliquetage et l'autre pour recevoir au moins une fiche de liaison du type à barbillon.

4. Dispositif selon la revendication 3, caractérisé en ce que le premier compartiment possède une ouverture d'enfichage qui se rétrécit progressivement et ensuite s'évase encore progressivement pour la fiche de liaison pourvue d'un épaississement sphérique, tandis que, dans le deuxième compartiment, la première paroi latérale joue le rôle de paroi de guidage pour la ou les fiches de liaison concernées et la paroi latérale en regard porte la languette de verrouillage.

5. Dispositif selon les revendications 3 et 4, caractérisé en ce que le compartiment pour la fiche de liaison à barbillon se trouve sur l'extrémité de tête, opposée à la paroi, du bloc de liaison.

6. Dispositif selon la revendication 5, pour autant qu'elle se rapporte à la revendication 2, caractérisé en ce que la fiche de liaison à encliquetage se trouve dans une position en regard de l'espace intermédiaire entre les deux fiches de liaison à barbillon.

## Patentansprüche

1. Vorrichtung zum Befestigen einer Leitung an einer Wand, bestehend aus einem zu einer die Leitung umfassenden Schelle biegbaren Materialstreifen, der an einem Ende mit einem an einem Stirnende zum Befestigen an einer Wand geeigneten Verbindungsblock versehen ist, und dessen andere, freie Ende zu einem Flansch gebildet ist, welcher von der Seite in eine Aussparung des Blockes fixierbar ist und dazu mit mindestens einem Verbindungsstift des Widerhakentyps versehen ist, der beim Hineinführen in die Aussparung längs einer Wand dieser Aussparung geführt wird und mit einem von der gegenüberliegenden Wand der Aussparung ausragenden, in der Einfuhrrichtung schräg zur erstgenannten Wand zeigenden Riegelvorsprung zusammenarbeitet, gekennzeichnet durch zwei in der Breite der Flansche im Abstand voneinander angeordnete Verbindungsstifte, welche mit einer den Riegelvorsprung bildenden gemeinsamen, breiten und biegsamen Riegelzunge zusammenarbeiten.

2. Vorrichtung nach Anspruch 1, gekennzeichnet durch sowohl nach dem Widerhakenprinzip, wie nach dem Schnappprinzip arbeitende Verbindungsstifte, welche in der Weise mit entsprechenden Schnapp- bzw. Hakenvorsprüngen an der Wand der Aussparung zusammenarbeiten, dass beim von der Seite Hineinführen des Flansches zunächst die Schnappverbindung und darauf, beim Weiterhineinführen, die Widerhakenverbindung zustande kommt.

3. Vorrichtung nach Anspruch 2, dadurch gekennzeichnet, dass die Aussparung von einer in die Einführrichtung verlaufenden Zwischenwand in zwei Abteilungen verteilt ist, deren eine zum Aufnehmen eines Verbindungsstiftes des Schnapptyps und deren zweite zum Aufnehmen mindestens eines Verbindungsstiftes des Widerhakentyps eingerichtet ist.

4. Vorrichtung nach Anspruch 3, dadurch gekennzeichnet, dass die eine Abteilung eine allmählich enger werdende und darauf sich allmählich erweiternde Einstecköffnung für den mit einer kuglichen Verdickung versehenen Schnappverbindungsstift ausweist, während von der zweiten Abteilung die eine Seitenwand als Führungswand für den (die) zugeordneten Verbindungsstift(e) des Widerhakentyps dient und die gegenüberliegende Seitenwand die Riegelzunge trägt.

5. Vorrichtung nach Anspruch 3-4, dadurch gekennzeichnet, dass die Abteilung für den Widerhaken-Verbindungsstift an dem von der Wand abgekehrten Stirnende des Verbindungsblockes vorgesehen ist.

6. Vorrichtung nach Anspruch 5, insoweit zurückbezogen auf Anspruch 1, dadurch gekennzeichnet, dass der Schnappverbindungsstift in einer dem Zwischenraum zwischen den beiden Widerhaken-Verbindungsstiften gegenüberliegenden Position angeordnet ist.

## Claims

1. A device for fastening a pipe to a wall, comprising a strip of material adapted to be bent into a clip surrounding the pipe, said strip having at one end a connecting block of which one terminal end is adapted for fastening to a wall, whereas the other, free end of the strip is formed into a flange that may be laterally inserted into a recess of the connecting block so as to be fixed therein and for that purpose is provided with at least one connecting pin of the bearded type, that is guided, while inserting said flange into the said recess, along a wall of said recess and cooperates with a locking projection that extends from the opposite wall of said recess obliquely towards said first wall as seen in the direction of insertion, characterized by two connecting pins which are mutual spaced across said flange and cooperate with a common, wide and flexible locking tongue forming said locking projection.

2. A device according to claim 1, characterized by connecting pins of both the bearded type and of the snap type, said pins cooperating with corresponding snap and bearded projections at the wall of the recess in such a way, that lateral insertion of the flange initially causes the snap connection to be formed, whereas the bearded connection is obtained upon further insertion.

3. A device according to claim 2, characterized in that a partition extending in the direction of introduction divides said recess into two compartments, one of which is adapted to receive a connecting pin of the snap type and the second of which being adapted to receive at least one connecting pin of the bearded type.

4. A device according to claim 3, characterized in that one compartment has an initially gradually narrowing and subsequently gradually widening insert opening for a sferical thickening of the snap connecting pin, while one wall of the second compartment is functioning as a guiding wall for the respective connecting pin(s) of the bearded type and the opposite side wall is carrying the locking tongue.

5. A device according to claim 3-4, characterized in that the compartment for the connecting pin of the bearded type is positioned at the terminal end of the connecting block that is turned away from said wall.

6. A device according to claim 5, as far as it refers back to claim 1, characterized in that the snap connecting pin is positioned opposite to the space between the two connecting pins of the bearded type.
